Europäisches Patentamt

European Patent Office

Office européen des brevets

(19)

(11) Numéro de publication: **0 656 443 A1**

(12) **DEMANDE DE BREVET EUROPEEN**

(21) Numéro de dépôt: **94402671.5**

(22) Date de dépôt: **23.11.94**

(51) Int. Cl.6: **D21H 27/28**, D21H 13/40, B44C 5/04

(30) Priorité: **02.12.93 FR 9314441**

(43) Date de publication de la demande: **07.06.95 Bulletin 95/23**

(84) Etats contractants désignés: **AT CH DE ES GB IT LI SE**

(71) Demandeur: **ARJO WIGGINS S.A. 3, rue du Pont de Lodi F-75006 Paris (FR)**

(72) Inventeur: **Perrin, Claude 375 rue du Bois F-38140 Apprieu (FR)** Inventeur: **Caulet, Pierre 18 rue Dode F-38500 Voiron (FR)**

(74) Mandataire: **Daudens, Michèle Société ARJO WIGGINS S.A., 3, rue du Pont de Lodi F-75006 Paris (FR)**

(54) **Feuille papetière pour stratifiés résistant à l'abrasion.**

(57) L'invention concerne une feuille papetière de surface utilisée pour la fabrication des stratifiés résistant à l'abrasion comportant de la laine de verre.

Selon l'invention, la feuille comporte, lorsqu'elle est non imprégnée de résine thermodurcissable, jusqu'à environ 7% en poids sec de laine de verre par rapport à son poids sec total.

Application comme feuille protectrice de recouvrement dite feuille "overlay" et feuille décor.

EP 0 656 443 A1

Rank Xerox (UK) Business Services
(3.10/3.09/3.3.4)

L'invention concerne une feuille papetière de surface utilisée dans la fabrication des papiers stratifiés, cette feuille leur conférant une résistance à l'abrasion accrue.

Il existe principalement deux sortes de panneaux stratifiés : les panneaux dits haute pression et les panneaux dits basse pression.

Depuis de nombreuses années, on emploie des stratifiés comme matériaux dans les habitations et les locaux commerciaux et industriels. Une application typique de tels stratifiés est le revêtement superficiel des meubles, des dessus de table, des chaises et autres. Ils sont par conséquent soumis à de nombreux frottements, à l'abrasion; une qualité recherchée pour ces stratifiés est donc une résistance à l'abrasion élevée.

On produit les stratifiés dits haute pression à partir d'une âme constituée de feuilles imprégnées de résine. Ces feuilles sont généralement en papier kraft; elles ont été imprégnées d'une résine thermodurcissable et plus particulièrement d'une résine phénolique.

Après avoir imprégné les feuilles de résine, on les sèche, on les découpe, puis on les empile les unes sur les autres. Le nombre de feuilles dans la pile dépend des applications et varie entre 3 et 9, mais peut être supérieur.

On place ensuite sur la pile de feuilles constituant l'âme, une feuille décorative. Une telle feuille est en général une feuille de papier portant un motif imprimé ou de couleur ou comportant des particules décoratives, imprégnée d'une résine thermodurcissable ne noircissant pas à la chaleur, par exemple des résines de mélamine-formaldéhyde, des résines de benzoguanamine-formaldéhyde, des résines de polyester insaturé. En général, on place au-dessus de la feuille décorative, une feuille protectrice de recouvrement, dépourvue de motif et transparente dans le stratifié final. En termes de métier, cette feuille protectrice est appelée "over-lay ou overlay". On place ensuite la pile de feuilles imprégnées dans une presse munie d'une tôle conférant l'état de surface. Puis, on densifie la pile par chauffage et pressage pour obtenir une structure unitaire.

On produit des stratifiés dits basse pression de façon similaire à celle des stratifiés haute pression, mais on effectue la stratification de la feuille décorative directement sur un panneau de particules de bois ou tout autre support de base.

La feuille protectrice dite "overlay" est traditionnellement fabriquée par égouttage d'une suspension aqueuse de fibres de cellulose peu raffinées. Cette feuille est de grammage léger, non opacifiée. Elle est imprégnée de résine thermodurcissable, ce qui entraine sa transparentisation dans le stratifié final et permet d'observer le décor du stratifié.

Cette feuille "overlay" protège la surface du stratifié, en particulier elle accroît sa résistance à l'abrasion car elle permet un apport supplémentaire de résine thermodurcissable. C'est la manière la plus courante d'augmenter la résistance à l'abrasion des stratifiés.

Cependant cette résistance peut encore être accrue par l'emploi de particules abrasives dans ou sur la feuille "overlay" ou sur la feuille décor elle-même.

On a ainsi décrit l'utilisation de particules, donc de forme (quasi)sphérique, d'alumine appelée aussi corindon, de silice, de carbure de bore ou de silicium ou de titane ou de tungstène, par exemple dans les brevets FR-A-2104707, FR-A-2139990, US-A-3661673, US-A-5141799 et CA 836522.

Ces particules peuvent être incorporées en masse ou mis à la surface de la feuille ou encore déposée sur la feuille imprégnée de résine.

Deux inconvénients de ces particules sont d'une part qu'elles provoquent une usure rapide des machines sur lesquelles on fabrique les feuilles protectrices les contenant ainsi que des presses à stratifier et d'autre part que leur fixation dans ou sur les feuilles est difficile du fait que soit elles se retiennent mal en masse soit elles adhèrent mal en surface.

Pour pallier ces inconvénients on peut penser utiliser des fibres résistantes à l'abrasion car, de par leur caractère fibreux, elles s'intègreraient mieux aux fibres de cellulose.

Cependant dans le brevet GB-A-1201071 déposé en 1967 on relate, dans l'art antérieur, que l'incorporation de fibres de verre dans une feuille protectrice afin d'améliorer la résistance à l'abrasion des stratifiés n'a pas conduit à des résultats satisfaisants, en particulier les fibres affectent l'apparence du stratifié.

Les exemples comparatifs décrits plus loin ont en effet confirmé que ces fibres restent visibles dans les feuilles après imprégnation.

Dans ces exemples il apparaît par ailleurs que les fibres de verre utilisées sous forme broyée conduisent à des résultats erratiques.

Comme le montrent les brevets déjà cités, cette idée a donc été abandonnée et les recherches ont toutes été orientées sur l'utilisation de particules, donc de forme arrondie, plus ou moins abrasives et sur des procédés divers pour les incorporer dans ou sur la feuille protectrice ou la feuille décor.

Contrairement aux recherches actuelles et déjà entreprises depuis plus de vingt-cinq ans et donc contrairement aux connaissances de l'homme du métier, la Demanderesse a cherché à utiliser des fibres et a trouvé que la résistance à l'abrasion des stratifiés peut être améliorée en utilisant une feuille de surface qui comportent des fibres de verre sans avoir les inconvénients cités si ces fibres sont incorporées sous forme de laine.

L'invention fournit donc une feuille papetière de surface utilisée pour la fabrication des stratifiés résistant à l'abrasion caractérisée par le fait qu'elle comporte de la laine de verre.

D'après les exemples 6 à 8, la résistance à l'abrasion des stratifiés n'augmente plus pour un taux de plus de 7% environ en poids sec de laine de verre par rapport au poids sec total de la feuille non imprégnée (voir le paragraphe "RESULTATS" des exemples).

Il est donc inutile de mettre plus de laine de verre. De plus si on veut utiliser cette feuille comme feuille décor imprimée, il est préférable de ne pas mettre trop de laine de verre car cela pourrait nuire à l'imprimabilité.

Donc plus particulièrement la feuille selon l'invention se caractérise par le fait qu'elle comporte, non imprégnée de résine thermodurcissable, jusqu'à environ 7% en poids sec de laine de verre par rapport à son poids sec total.

L'invention concerne aussi la feuille imprégnée par une résine thermodurcissable.

La feuille selon l'invention peut être utilisée comme feuille protectrice de recouvrement dite "overlay".

La feuille est placée sur la feuille décor du stratifié.

Dans un autre cas la feuille selon l'invention peut être utilisée directement comme feuille décor du stratifié.

La feuille selon l'invention est obtenue par voie papetière à partir d'une composition aqueuse à base de fibres de cellulose, la laine de verre est ajoutée aux fibres de cellulose; la composition comporte de préférence un agent de résistance humide. S'il s'agit d'une feuille destinée au décor, la composition peut comporter des pigments opacifiant ou colorant.

La feuille peut éventuellement être constituée de plusieurs jets, le jet supérieur contenant la laine de verre.

La demanderesse revendique aussi un stratifié résistant à l'abrasion qui se caractérise par le fait qu'il comporte comme feuille dite "overlay", une feuille selon l'invention.

La demanderesse revendique aussi un stratifié résistant à l'abrasion qui se caractérise par le fait qu'il comporte comme feuille décor, une feuille selon l'invention.

Eventuellement le stratifié peut comporter la feuille selon l'invention comme feuille décor et une feuille "overlay" classique (sans laine de verre) pour une résistance à l'abrasion encore supérieure.

Dans une autre éventualité le stratifié peut comporter à la fois une feuille décor et une feuille "overlay" toutes les deux selon l'invention pour une résistance à l'abrasion encore supérieure.

Donc la demanderesse revendique dans un cas particulier, un stratifié résistant à l'abrasion qui se caractérise par le fait qu'il comporte comme feuille dite "overlay", une feuille selon l'invention et comme feuille décor, une feuille selon l'invention.

L'invention sera mieux comprise à l'aide des exemples non limitatifs suivants:

EXEMPLES 1 et 2 de référence :

On réalise deux feuilles overlay classiques sur une machine à papier de type Foudrinier à partir d'une composition en milieu aqueux de fibres de cellulose raffinée à 20˚SR (degrés SCHOEPPER-RIEGLER) et qui contient 2% en poids sec d'un agent de résistance humide à base de résine mélamine-formaldéhyde.

Les feuilles après séchage ont pour l'exemple 1 et l'exemple 2 respectivement un grammage de 32,5 et de 41 g/m$^2$.

On mesure la porosité GURLEY (norme ISO 5636-5) d'une pile de 5 feuilles pour se situer dans une gamme de données mesurables par l'appareil.

Pour une feuille, on mesure l'ascension capillaire selon la méthode de KLEMM (norme ISO 08-787) pour un temps de 10 minutes.

On détermine le taux de cendres selon la norme ISO 2144(1987) à 420°C.

On imprègne chaque feuille avec une résine mélamine-formaldéhyde en milieux aqueux, le taux d'imprégnation est de 65% c'est-à-dire qu'il y a environ 65 grammes de résine en poids sec pour 100 grammes de papier imprégné.

On stratifie cette feuille pour fabriquer un stratifié haute pression selon la méthode et les conditions opératoires suivantes : on empile 5 feuilles de papier kraft imprégnées de résine phénolique puis une feuille décor imprimée, imprégnée de résine mélamine-formaldéhyde et enfin on place la feuille overlay imprégnée.

On chauffe les plateaux de la presse à stratifier à 160 °C et on applique une pression de 6,9 MPa (70 kg/cm$^2$) pendant 30 minutes.

On mesure la résistance à l'abrasion du stratifié obtenu selon la norme NF-EN 438-2(1991) paragraphe 6.

EXEMPLES avec des fibres de verre classiques:

On réalise des feuilles overlay comme dans les exemples de référence mais on ajoute x parts en poids sec de fibres de verre (x étant égal à 5 ou à 10) pour 100 parts de fibres de cellulose.

On utilise deux grades différents de fibres de verre, l'un correspond à des fibres ayant une longueur moyenne de 4,5 mm et un diamètre moyen de 10 $\mu$m, l'autre correspond à des fibres ayant une longueur moyenne de 4,5 mm et un diamètre moyen de 14 $\mu$m.

On introduit ces fibres soit avant raffinage soit après raffinage.

On imprègne les feuilles comme dans les exemples de référence.

On stratifie les feuilles comme dans les exemples 1 et 2 de référence.

Dans tous les cas, après stratification, on observe les fibres de verre à la surface du stratifié, que les fibres soit introduites avant ou après raffinage, donc qu'elles soient ou non broyées lors du raffinage et quel que soit leur taux dans le papier.

On ne peut donc pas utiliser des fibres de verre classiques car elles voilent le décor du stratifié.

EXEMPLES 3 à 5 avec des fibres de verre prébroyées :

On réalise une feuille overlay comme dans les exemples de référence mais on ajoute x parts en poids sec de fibres de verre prébroyées pour 100 parts de fibres de cellulose (x étant égal à 3, 9 ou 14).

Ces fibres sont ajoutées au cuvier de la machine à papier.

On utilise des fibres de verre ayant un diamètre moyen de 10 $\mu$m et une longueur moyenne de 0,27 mm.

On imprègne les feuilles comme dans les exemples de référence.

On stratifie les feuilles comme dans les exemples 1 et 2 de référence.

On n'observe pas de voilage après stratification mais on obtient des résultats irréguliers en ce qui concerne la résistance à l'abrasion (voir tableau 1).

EXEMPLES 6 à 9 avec de la laine de verre :

Comme précédemment on ajoute x parts en poids sec de laine de verre pour 100 parts de fibres de cellulose (x étant égal à 3, 9 ou 14).

On utilise deux grades différents de laine de verre :
- pour les exemples 6 à 8, on utilise une laine dont les fibres ont une longueur moyenne de 0,7 mm et un diamètre moyen de 10 $\mu$m,
- pour l'exemple 9, on utilise une laine dont les fibres ont une longueur moyenne de 6 mm et un diamètre moyen de 4 $\mu$m (l'histogramme des diamètres va de 1 à 20 $\mu$m).

On imprègne les feuilles comme dans les exemples de référence.

On stratifie comme dans les exemples de référence.

On observe une bonne transparentisation des feuilles, le décor n'est pas altéré par la feuille overlay.

RESULTATS :

Les résultats présentés dans le tableau 1 montrent :
- qu'à taux d'imprégnation identique en résine et à grammage identique (comparer les exemples 2 et 6), une feuille selon l'invention, pour laquelle on a introduit 3 parts de laine de verre pour 100 de fibres de cellulose, a sa résistance à l'abrasion augmenté de 50 tours par rapport à une feuille ne contenant pas de laine de verre;
- le niveau de résistance à l'abrasion d'une feuille selon l'invention pour laquelle on a introduit 3 parts de laine de verre pour 100 de libres de cellulose et ayant un grammage de 32 g/m$^2$ (exemple 6) est légèrement supérieur à celui d'une feuille ne contenant pas de laine de verre et ayant un grammage de 41 g/m$^2$ (exemple 1), ainsi on peut utiliser une feuille de plus faible grammage, donc utilisant moins de résine thermodurcissable, pour avoir un niveau donné de résistance à l'abrasion;
- le niveau de résistance à l'abrasion est identique pour les exemples 7 et 8, ce niveau plafonne donc pour un taux de laine de verre d'environ 7 % en poids sec par rapport au poids total de la feuille de

4

papier non imprégnée. En effet 9 parts de laine de verre correspondent à un taux de cendres à 420 °C de 7,4 %, ce taux de cendres comprend la laine de verre et le résidu de la pâte cellulosique, or d'après le témoin de l'exemple 2 qui a un grammage similaire, le résidu dû à la pâte cellulosique est au maximum de 0,4% , on en déduit approximativement un taux de laine de verre de 7% dans le papier final (non imprégné).

TABLEAU 1

| exemple | 1 | 2 | 3 | 4 | 5 | 6 | 7 | 8 | 9 |
|---|---|---|---|---|---|---|---|---|---|
| x (parts) | 0 | 0 | 3 | 9 | 14 | 3 | 9 | 14 | 3 |
| grammage (g/m²) | 41 | 32,5 | 32,8 | 32,7 | 32,2 | 33 | 32,5 | 33,6 | 32 |
| main (cm³/g) | 1,85 | 1,96 | 2,01 | 1,98 | 2,05 | 2,03 | 2,11 | 2,13 | 2,37 |
| porosité Gurley (s/100 cm³ d'air) | 10,7 | 6,4 | 4,4 | 3,8 | 3,2 | 5,2 | 3 | 2,8 | 3,3 |
| ascension capillaire 10 mn (mm) | 56 | 34 | 52 | 41 | 42 | 35 | 62 | 48 | 46 |
| taux de cendres (%) | 0,7 | 0,4 | 1,2 | 5,9 | 8,6 | 2,9 | 7,4 | 10,7 | 3 |
| résistance à l'abrasion (tours) | 450 | 400 | 450 | 400 | 450 | 450 | 500 | 500 | 450 |

5

**Revendications**

1.  Feuille papetière de surface utilisée pour la fabrication des stratifiés résistant à l'abrasion caractérisée par le fait qu'elle comporte de la laine de verre.

2.  Feuille selon la revendication 1, caractérisée par le fait qu'elle comporte, lorsqu'elle est non imprégnée de résine thermodurcissable, jusqu'à environ 7% en poids sec de laine de verre par rapport à son poids sec total.

3.  Feuille selon l'une des revendications 1 ou 2, caractérisée par le fait qu'elle est imprégnée d'une résine thermodurcissable.

4.  Feuille selon l'une des revendications 1 à 3, caractérisée par le fait qu'elle est utilisée comme feuille protectrice de recouvrement dite feuille "overlay".

5.  Feuille selon l'une des revendications 1 à 3, caractérisée par le fait qu'elle est utilisée comme feuille décor.

6.  Stratifié résistant à l'abrasion caractérisé par le fait qu'il comporte comme feuille dite "overlay", une feuille selon la revendication 4.

7.  Stratifié résistant à l'abrasion caractérisé par le fait qu'il comporte comme feuille décor, une feuille selon la revendication 5.

8.  Stratifié résistant à l'abrasion caractérisé par le fait qu'il comporte comme feuille dite "overlay", une feuille selon la revendication 4 et comme feuille décor, une feuille selon la revendication 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP-A-0 430 770 (SAINT-GOBAIN RECHERCHE) <br> * le document en entier * <br> --- | 1-4,6 | D21H27/28 <br> D21H13/40 <br> B44C5/04 |
| Y | EP-A-0 078 424 (METZELER SCHAUM GMBH) <br> * le document en entier * <br> --- | 1-4,6 | |
| A | PATENT ABSTRACTS OF JAPAN <br> vol. 003 no. 019 (C-037) ,17 Février 1979 <br> & JP-A-53 145890 (OSAKA SODA CO LTD) 19 <br> Décembre 1978, <br> * abrégé * <br> --- | 1-8 | |
| A | US-A-4 210 692 (BOHME ET AL.) <br> * le document en entier * <br> ----- | 1-8 | |
| | | | **DOMAINES TECHNIQUES RECHERCHES (Int.Cl.6)** |
| | | | D21H <br> B44C |

Le présent rapport a été établi pour toutes les revendications

| Lieu de la recherche | Date d'achèvement de la recherche | Examinateur |
|---|---|---|
| LA HAYE | 24 Janvier 1995 | Songy, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................

& : membre de la même famille, document correspondant

EPO FORM 1503 03.82 (P04C02)